# EUROPEAN PATENT APPLICATION

(11) **EP 1 550 686 A1**
(43) Date of publication of application: **06.07.2005**
(21) Application number: 03751305.8
(22) Date of filing: 01.10.2003
(51) Int. Cl.: C08G 75/04

(54) **PROCESS FOR THE PRODUCTION OF POLYARYLENE SULFIDE**

(30) Priority: 04.10.2002 JP 2002291899
(71) Applicant: IDEMITSU KOSAN CO., LTD., Tokyo 100-8321 (JP)
(72) Inventor: HAYASHI, Mikiya, Ichihara-shi, Chiba 299-0107 (JP); SENGA, Minoru, Ichihara-shi, Chiba 299-0107 (JP)
(74) Representative: Gille Hrabal Struck Neidlein Prop Roos
(86) International application number: PCT/JP2003/012599
(87) International publication number: WO 2004/031262

(57) **Abstract**

The production process of the present invention for polyarylene sulfide is **characterized by** that in a process for continuously producing polyarylene sulfide by reacting a sulfur source with a dihalogenated aromatic compound in an aprotic organic solvent, it comprises at least one polymerization reaction step in which two phases of a polymer phase and a solvent phase are separated and in which the polymer phase corresponding to a dispersion phase is a dispersion phase comprising globular droplets and that an end terminator is used in the above polymerization reaction step. According to the present invention, a polymer can be prevented from being adhered onto a polymerization reaction bath to thereby make it possible to discharge a polymer phase and a solvent phase from the polymerization bath in a constant proportion; resultingly, a PAS composition (concentration) in the polymerization bath can always be maintained at a constant value; and polyarylene sulfide having a raised and stabilized molecular weight can continuously be produced.

## Description

### TECHNICAL FIELD

The present invention relates to a production process for polyarylene sulfide, more specifically to a continuous polymerization process for polyarylene sulfide in which in the production of polyarylene sulfide particularly useful in the electronic and electric material field, the automobile field and the heat resistant material field. The present invention further relates to a continuous polymerization process for polyarylene sulfide in which the polymer can be prevented from being adhered onto a polymerization reaction bath thereby making it possible to discharge a polymer phase and a solvent phase from the polymerization reactor in a constant proportion resulting in enabling to always maintain a continuous polymerization process for polyarylene sulfide in which polyarylene sulfides (PAS) composition (concentration) in the polymerization bath at a constant value and which is useful for a raise and a stabilization in the molecular weight.

### BACKGROUND ART

Polyarylene sulfides (it will be occasionally referred as PAS hereinafter), particularly polyphenylene sulfides (it will be occasionally referred as PPS hereinafter) out of them are known as an engineering plastic which is excellent in a mechanical strength, a heat resistance, a flame retardancy and a solvent resistance and which has good electrical characteristics and a high rigidity, and it is widely used as various materials such as materials for car parts, electronic and electric equipment parts, machine parts and the like.

Such PAS resin has so far been produced by a batch process, but in recent years, demand to continuous polymerization for the purpose of improving the production efficiency has grown larger. Continuous polymerization processes for PAS are disclosed in, for example, U.S. Patent No. 4,056,515, U.S. Patent No. 4,060,520 and U.S. Patent No. 4,066,632, but there has been the problem that any of PAS obtained by the processes described above has a furiously low molecular weight.

On the other hand, proposed in Japanese Patent Application Laid-Open No. 169844/1997 is a polymerization process in which a phase-separating agent (water, sodium acetate, alkali metal salts and the like) is used for the purpose of raising a molecular weight of the polymer to carry out polymerization by separating a polymerization solution into two phases of a polymer phase and a solvent phase.

In the case of continuous polymerization using such phase-separating agent, there used to be brought about the problem that a polymerization reaction liquid is turned into the state that it is subjected to phase separation into a polymer phase and a solvent phase in a polymerization bath and that the polymer phase precipitates due to a difference in a specific gravity among a bottom part of the bath and a pipeline in which an effect of a shearing power caused by stirring and the like is less liable to be exerted to bring about a case where a composition ratio (concentration) of the polymer phase/the solvent phase is not maintained at a constant value during, for example, transporting the polymerization reaction liquid, which results in causing a variation in a molecular weight due to a variation in a concentration of the polymer in the polymerization bath to make it difficult to produce PAS having a stabilized molecular weight.

In order to cope with the above problem, a process in which a polymer phase and a solvent phase are separately drawn out is proposed in Japanese Unexamined Patent Application Laid-Open No. 169844/1997 described above. In the above process, however, involved are problems that a specific reactor form is used and a pipeline structure is complicated and that it is difficult to control a flow amount, and therefore the countermeasure thereof against the problems described above has been unsatisfactory. That is, required is a process in which a polymer phase and a solvent phase can be discharged from a polymerization bath in a constant proportion in continuous polymerization using a phase-separating agent to result in enabling to always maintain a PAS composition (concentration) in the polymerization bath at a constant value.

Then, the present inventors established a process in which in a principal polymerizing step in the continuous production of PAS, a polymer phase and a solvent phase could be discharged from a polymerization bath in a constant proportion by turning a droplet form of the polymer phase which is a dispersing phase into a globular form to result in enabling to always maintain a PAS composition (concentration) in the polymerization bath at a constant value, whereby they could provide a continuous polymerization process for polyarylene sulfide which is useful for a raise and a stabilization in the molecular weight (refer to Japanese Unexamined Patent Application Laid-Open No. 265603/2002). However, another problem has been produced. That is, it can be foreseen that the polymer is adhered onto the wall of the reaction bath under some condition after several ten to several hundred hours to result in causing inferior heat transfer of a jacket temperature and that if adhesion of the polymer grows, it becomes impossible sooner or later to discharge the polymer phase and the solvent phase in a constant proportion.

### DISCLOSURE OF THE INVENTION

The present invention has been made in light of the problems described above, and an object thereof is to establish a continuous polymerization process for PAS in which the polymer can be prevented from being adhered onto a polymerization reaction bath to thereby make it possible to discharge a polymer phase and a solvent phase from the polymerization reactor in a constant proportion resultantly enabling to always maintain a PAS composition (concentration) in the polymerization bath at a constant value and provide a continuous polymerization process for polyarylene sulfide which is useful for a raise and a stabilization in the molecular weight.

In light of the problems described above, intensive researches repeated by the present inventors have resulted in finding that the object described above can effectively be achieved by turning a droplet form of a polymer phase which is a dispersing phase into a globular form in a principal polymerizing step in the continuous production of PAS and using an end terminator in preliminary polymerization or continuous polymerization. The present invention has been completed based on such knowledge.

That is, the summary of the present invention includes the following items.
1. A production process for polyarylene sulfide which is a process for continuously producing polyarylene sulfide by reacting a sulfur source with a dihalogenated aromatic compound in an aprotic organic solvent, characterized by comprising at least one polymerization reaction step in which two phases of a polymer phase and a solvent phase are separated and in which the polymer phase corresponding to a dispersion phase is a dispersion phase comprising globular droplets; and characterized by using an end terminator in the above polymerization reaction step.
2. The production process as described in the above item 1, wherein the polymerization is carried out at a temperature falling within the range of from 230 to 280°C in the polymerization reaction step described above.
3. The production process as described in the above item 1, wherein the continuous polymerization is carried out after charging the reactor in advance with a phase-separating agent and the aprotic organic solvent.
4. The production process as described in the above item 1, wherein the continuous polymerization is carried out after the sulfur source and the dihalogenated aromatic compound are subjected in advance to batch polymerization in the aprotic organic solvent to turn the polymer phase corresponding to the dispersion phase into globular droplets.
5. The production process as described in the above item 1, wherein preliminary polymerization is carried out in advance.
6. The production process as described in the above item 5, wherein the preliminary polymerization is carried out at a temperature falling within a range of from 180 to 220°C.
7. The production process as described in the above item 1 or 5, wherein an end terminator is added in the preliminary polymerization or the continuous polymerization to carry out the reaction.

### BEST MODE FOR CARRYING OUT THE INVENTION

The present invention will be explained below in further details.

The PAS production process of the present invention is a process for continuously producing polyarylene sulfide by reacting a sulfur source with a dihalogenated aromatic compound in an aprotic organic solvent, characterized by comprising at least one polymerization reaction step in which two phases of a polymer phase and a solvent phase are separated and in which the above polymer phase is a dispersion phase of globular droplets; and characterized by using an end terminator in the above polymerization reaction step. To be specific, it is a continuous polymerization process in which the whole part of the polymerization operation including charging of the raw materials for polymerization and the solvent and taking out of the product is continuously carried out while transferring the reaction liquid in order into a polymerization bath which comprises a single stage or which is connected in a multistage.

In the present invention, firstly the production process is characterized by comprising a polymerization reaction step in which a polymer phase corresponding to a dispersion phase comprises globular droplets. A method for producing such globular droplets shall not specifically be restricted and includes, for example, a method in which the reactor is charged in advance with the phase-separating agent and the aprotic organic solvent before starting the continuous polymerization and a method in which batch polymerization is carried out in advance on prescribed conditions to form the globular droplets in the reactor.

In the continuous polymerization step, the polymerization is carried out at a temperature of usually 230 to 280°C, preferably 240 to 270°C. When the temperature described above is lower than 230°C, the globular polymer is not produced in a certain case. On the other hand, when it is higher than 280°C, the polymer is decomposed in a certain case.

In the present invention, the term ┌globular┘ includes elliptic globules as well as complete globules and others having forms similar to them or partially deformed matters thereof having forms substantially close to globules.

Alkali metal salts such as lithium chloride, sodium acetate and lithium and water are used as the phase-separating agent, and lithium chloride is particularly preferably used.

In general, aprotic polar organic compounds (for example, amide compounds, lactam compounds, urea compounds, organic sulfur compounds and cyclic organic phosphorus compounds) can be used as the aprotic organic solvent in the form of a single solvent or a mixed solvent.

Among the above aprotic organic solvent, examples of the above amide compounds include, N,N-dimethylformamide, N,N-diethylformamide, N,N-dimethylacetamide, N,N-diethylacetamide, N,N-dipropylacetamide and N,N-dimethylbenzoamide.

Examples of the above lactam compounds include, caprolactam, N-alkylcaprolactams such as N-methylcaprolactam, N-ethylcaprolactam, N-isopropylcaprolactam, N-isobutylcaprolactam, N-n-propylcaprolactam, N-n-butycaprolactam and N-cyclohexylcaprolactam, N-methyl-2-pyrrolidone (NMP), N-ethyl-2-pyrrolidone, N-isopropyl-2-pyrrolidone, N-isobutyl-2-pyrrolidone, N-n-propyl-2-pyrrolidone, N-n-butyl-2-pyrrolidone, N-cyclohexyl-2-pyrrolidone, N-methyl-3-methyl-2-pyrrolidone, N-ethyl-3-methyl-2-pyrrolidone, N-methyl-3,4,5-trimethyl-2-pyrrolidone, N-methyl-2-piperidone, N-ethyl-2-piperidone, N-isopropyl-2-piperidone, N-methyl-6-methyl-2-piperidone and N-methyl-3-ethyl-2-piperidone.

For example, tetramethylurea, N,N'-dimethylethyleneurea and N,N'-dimethylpropyleneurea can be nominated as the urea compounds described above.

Further, examples of the above sulfur compounds include dimethyl sulfoxide, diethyl sulfoxide, diphenylsulfolane, 1-methyl-1-oxosulfolane, 1-ethyl-1-oxosulfolane and 1-phenyl-1-oxosulfolane, and capable of being given as the cyclic organic phosphorus compounds described above are, for example, 1-methyl-1-oxophosphorane, 1-n-propyl-1-oxophosphorane and 1-phenyl-1-oxophosphorane.

The above various aprotic polar organic compounds each can be used as the aprotic organic solvent described above alone or in a mixture of two or more kinds thereof and further in a mixture with other solvent components which do not hinder the object of the present invention.

Among the various aprotic organic solvents described above, N-alkylcaprolactams and N-alkylpyrrolidones are preferred, and N-methyl-2-pyrrolidone is particularly preferred.

A content of the phase-separating agent described above in the aprotic organic solvent in the present invention shall not specifically be restricted as long as it provides a condition on which the polymer phase is separated, and a concentration thereof in one liter of the aprotic organic solvent is usually 2.8 to 5.6 mole, preferably 3.4 to 4.6 mole. Also, it is usually 0.05 to 3.0 moles, preferably 0.2 to 2.5 moles per mole of a sulfur atom in the sulfur source.

When the content is smaller than the range described above, the globular polymer phase is less liable to be produced in a certain case.

In the continuous polymerization process for PAS according to the present invention, adding order of the raw material components shall not specifically be restricted excluding the viewpoints described above. In a process in which the sulfur source such as lithium sulfide and the polymerization material such as the dihalogenated aromatic compound or low molecular weight PAS are added to the aprotic organic solvent containing the phase-separating agent, it is required that the polymer phase and the solvent phase stay in a phase separation state by virtue of the presence of the phase-separating agent, that is, both the polymer phase and the solvent phase are liquid phases and stay in a separating state.

In the present invention, alkali metal sulfides, alkali metal hydrogensulfides and hydrogen sulfide are used as the sulfur source, and lithium sulfide is particularly preferably used. They have to be used in combination with alkali metal hydroxide such as lithium hydroxide.

In such case, a mole ratio (Li/S) of lithium to the sulfur source in the reaction bath is usually 2.00 to 2.40, preferably 2.05 to 2.30. When it is less than 2.00, the polymer having a satisfactory molecular weight is not obtained in a certain case. On the other hand, when it exceeds 2.40, recovery of lithium costs a lot and is not economical in a certain case.

The dihalogenated aromatic compound shall not specifically be restricted, and publicly known compounds used for producing polyarylene sulfide can be described as the suited examples thereof.

Typical examples of the dihalogenated aromatic compounds include dihalogenated benzenes such as m-dihalobenzene and p-dihalobenzene; dihalogenated alkyl-substituted benzenes or dihalogenated cycloalkyl-substituted benzenes such as 2,3-dihalotoluene, 2,5-dihalotoluene, 2,6-dihalotoluene, 3,4-dihalotoluene, 2,5-dihaloxylene, 1-ethyl-2,5-dihalobenzene, 1,2,4,5-tetramethyl-3,6-dihalobenzene, 1-n-hexyl-2,5-dihalobenzene and 1-cyclohexyl-2,5-dihalobenzene; dihalogenated aryl-substituted benzenes such as 1-phenyl-2,5-dihalobenzene, 1-benzyl-2,5-dihalobenzene and 1-p-toluyl-2,5-dihalobenzene; dihalogenated biphenyls such as 4,4'-dihalobiphenyl; and dihalonaphthalenes such as 1,4-dihalonaphthalene, 1,6-dihalonaphthalene and 2,6-dihalonaphthalene.

Two halogen elements in the above dihalogenated aromatic compounds each are fluorine, chlorine, bromine or iodine, and they may be the same or different from each other. Among them, the dihalobenzenes are preferred, and the dihalobenzenes containing 50 mole % or more of p-dichlorobenzene are particularly preferred.

A blending amount of the dihalogenated aromatic compound to the sulfur source is set so that a mole ratio of the dihalogenated aromatic compound/sulfur atom is usually 0.95 to 1.20, preferably 1.00 to 1.10. When it is less than 0.95, PAS is decomposed, and when it exceeds 1.20, the recovering cost of the dihalogenated aromatic compound is raised in a certain case. A concentration of the dihalogenated aromatic compound contained in one liter of the aprotic organic solvent is usually 1.4 to 2.8 moles, preferably 1.7 to 2.3 moles. When it is less than 1.4 moles, the productivity is deteriorated in a certain case, and when it exceeds 2.8 mole, the satisfactory molecular weight is not obtained in a certain case.

A blending ratio of the respective components is a flow amount ratio (a mass, a mole amount and the like per unit time) of the respective components flowing into the prescribed bath (the same shall apply in the following explanations).

In the present invention, the presence of the end terminator is essential. It is required in the continuous polymerization (principal polymerization) or preliminary polymerization described later. The end terminator includes monohalo aromatic compounds such as bromobenzene, chlorobenzene, chloronitrobenzene, chlorophenol, chloroaniline and chlorobenzoic acid and monomercapto aromatic compounds such as thiophenol, aminothiophenol and hydroxythiophenol. The monohalo aromatic compounds include preferably chlorobenzene and chlorobenzoic acid. The monomercapto aromatic compounds include preferably thiophenol and aminothiophenol. A blending amount of the end terminator to the sulfur source is set so that a mole ratio of the end terminator/sulfur atom is usually 0.001 to 0.05, preferably 0.002 to 0.02. When it is less than 0.001, the effect of preventing the polymer from adhering is small, and when it exceeds 0.05, the effect corresponding to the amount is not revealed in a certain case.

Further, in the present invention, a branching agent such as an active hydrogen-containing halogenated aromatic compound, a polyhalogenated aromatic compound having three or more halogen atoms in a molecule and a polyhalogenated aromatic nitro compound in addition to the dihalogenated aromatic compound described above can suitably be selected, if necessary, and added to the reaction system, and they can be used. Examples of the branching agent include 1,2,4-trichlorobnzene, 1,3,5-trichlorobnzene and 1,2,3-trichlorobnzene. A blending amount of the branching agent to the sulfur source is set so that a mole ratio of the branching agent/sulfur atom is usually 0.001 to 0.02, preferably 0.002 to 0.015. When it is less than 0.001, the characteristics of the branching agent are not revealed in a certain case. On the other hand, when it exceeds 0.02, the molecular weight becomes too high to cause gelation, and the reaction can not be controlled in a certain case.

In the continuous polymerization operation in the present invention, the polymerization temperature is set, as described above, within the range of from 230 to 280°C, preferably from 240 to 270°C. The other conditions shall not specifically be restricted, and the continuous polymerization can be carried out according to conditions disclosed in several publicly known documents such as Japanese Unexamined Patent Application Laid-Open No. 248077/1994 and the like.

For example, a retention time of the polymerization materials and low molecular weight PAS which flow in the continuous polymerization bath is settled, though different depending on the flow amounts of the respective components and a form and a size of the bath, to usually 0.1 to 20 hours, preferably 0.5 to 10 hours and more preferably 1 to 5 hours.

In the present invention, the use stage number of the polymerization bath shall not specifically be restricted. A multistage bath can be used, and the temperature condition may be changed to two or more multistage. In this case, the polymer phase in at least one bath including the last polymerization bath comprises preferably globular droplets, and the polymer phases in all the baths comprise particularly preferably globular droplets. Accordingly, in the present invention, the phase-separating agent may be added to at least one bath including the last polymerization bath, and it is preferably added to all the baths from the viewpoint that the composition in the polymerization bath is maintained at a constant value.

The polymerization bath and the stirring blade which are used in the present invention shall not specifically be restricted. The polymerization bath has preferably a form which is suited to complete stirring, and the stirring blade is preferably a large-sized blade of a full zone and the like.

The sulfur source such as lithium sulfide and the dihalogenated aromatic compound each described above may be used as the raw materials used for the continuous polymerization, and a matter obtained by preliminarily polymerizing them in advance by a continuous or batch system is preferably used in order to obtain PAS having a high molecular weight.

This preliminary polymerization shall not specifically be restricted. For example, the dihalogenated aromatic compound, water and the aprotic organic solvent are added to the reaction mixture containing the lithium sulfide compound obtained above, and the mixture is maintained at the temperature within the range from 180 to 220°C, preferably 190 to 210°C for 0.1 to 10 hours, preferably 1 to 6 hours by a continuous system to thereby carry out the preliminary polymerization. When the temperature is lower than 180°C, long time is required for allowing the reaction to proceed. When the temperature exceeds 220°C, a reaction rate of the monomer goes up, and the globular droplets are not formed in the subsequent continuous polymerization in a certain case. The blending amounts of the respective polymerization components preferably satisfy the following conditions.

A mole number of the dihalogenated aromatic compound contained in one liter of the aprotic organic solvent is preferably 1.4 to 2.8 (mole/liter), more preferably 1.7 to 2.3 (mole/liter). When it is less than 1.4, the globular droplets are not formed in a certain case, and when it exceeds 2.8, the globular droplets are not formed in a certain case. An amount of the dihalogenated aromatic compound to the sulfur source is set so that a mole ratio of the dihalogenated aromatic compound/sulfur atom is usually 0.90 to 1.20, preferably 0.95 to 1.00. When it is less than 0.90, PAS is decomposed, and if it exceeds 1.20, the recovering cost of the dihalogenated aromatic compound becomes expensive in a certain case.

A reaction rate of the monomer after the preliminary polymerization is usually 50 to 90 %, preferably 50 to 80 %. When it is less than 50 %, the globular droplets are formed but are not turned into a high molecular weight in a certain case, and when it exceeds 90 %, the globular droplets are not formed in a certain case.

A mole ratio (water/the sulfur source) of water to the sulfur source is usually 0.20 to 2.00, preferably 0.30 to 1.50. When it is less than 0.20, the reaction system is decomposed in the subsequent continuous polymerization in a certain case, and when it exceeds 2.00, the reaction rate is liable to grow high and exceeds 90 % in a certain case.

PAS produced having a low molecular weight is subjected to the principal polymerization operation described above.

Water can be added to the polymerization solution after the principal polymerization to such an extent that PAS is not solidified to carry out a washing operation. An amount of water may be such an amount that PAS is not solidified and deposited by cooling too much. Usually, the washing bath is preferably stirred so that the polymerization solution is mixed well with water.

The washing solution shall not specifically be restricted as long as it dissolves impurities and byproducts adhered onto the polymer and does not exert an adverse effect on the polymer. For example, methanol, acetone, benzene, toluene, water and NMP can be employed, and among them, water is preferred.

The polymerization solution obtained after finishing the polymerization reaction is subjected to a separating operation in a separating bath in order to separate the polymer phase from the solvent phase.

A method described in Japanese Unexamined Patent Application Laid-Open No. 319009/2000 can be used for a method in which lithium sulfide is obtained from the solvent phase separated (the principal components are NMP, water and LiCl) via lithium hydroxide.

The washing and separating step may be repeated in an optional frequency in order to obtain the satisfactory washing and separating effect.

In the present invention, the solvent is still contained in the polymer phase which has finished the washing and separating step, and therefore the solvent is preferably removed therefrom. This solvent-removing operation shall not specifically be restricted and can be carried out according to a solvent-removing method used in publicly known PAS production processes (for example, a flash method disclosed in Japanese Unexamined Patent Application Laid-Open No. 33878/1995).

PAS which has finished the solvent-removing operation described above can be cooled, solidified and granulated by a suitable method, and then it can be taken out. Air cooling, water cooling or oil cooling is employable as a cooling method.

In the process of the present invention, thus, polyarylene sulfide which has such a molecular weight that a solution viscosity (η inh: inherent viscosity) of the polymer is 0.1 or more, preferably 0.14 or more and which is gel-formable in a certain case can readily and stably be obtained by a simplified step. Further, inherent viscosity variation with the passage of time or between batches in producing the polymer is notably improved.

The solution viscosity (η inh)described above is a value obtained by holding polyarylene sulfide obtained by the method described above in α-chloronaphthalene at the temperature of 235°C for 30 minutes to dissolve it so that a concentration of 4 g/liter is obtained and measuring a viscosity thereof at a temperature of 206°C by means of a Ubbelohde viscometer.

When various products are molded from the polyarylene sulfide obtained according to the present invention, the polyarylene sulfide can suitably be blended, if necessary, with fillers, stabilizers and mold releasing agents such as other polymers, pigments, graphite, metal powder, glass powder, quartz powder, talc, calcium carbonate, glass fibers, carbon fibers and various whiskers.

The polyarylene sulfide obtained according to the present invention can suitably be used as a material for various molded articles, for example, a material for films, fibers, machine parts, electric parts and electronic parts.

The present invention shall more specifically be explained below with reference to examples, but the present invention shall by no means be restricted by these examples.

### Example 1

### [Preliminary polymerization]

An autoclave having a capacity of 10 liter and equipped with a stirrer having a stirring blade was charged with 3.5 liter of N-methyl-pyrrolidone (hereinafter referred to as NMP), 47.9 g (2 mole) of anhydrous lithium hydroxide, 11.02 g (0.1 mole) of thiophenol (hereinafter referred to as TP) and 459.5 g (10 mole) of lithium sulfide, and it was heated up to the temperature of 210°C under nitrogen atmosphere while stirring. When reaching 210°C, a mixture of 0.83 liter of NMP, 1,426 g (9.7 mole) of p-dichlorobenzene (hereinafter referred to as p-DCB) and 54.2 g (3 moles) of water was added to the autoclave of 210°C described above to react them at the temperature of 210°C for 2 hours, whereby a polyarylene sulfide oligomer was obtained. p-DCB had a reactivity of 75.0 % in the prepolymer thus obtained. The prepolymer was used according to an amount required for continuous polymerization in the subsequent step.

The conditions in the preliminary polymerization were a sulfur concentration of 2.24 mole/liter of NMP, p-DCB/S = 0.97, H₂O/S = 0.30, Li/S = 2.20 and TP/S = 0.01.

### [Continuous principal polymerization]

An autoclave having a capacity of 10 liter and equipped with a full zone blade was charged with 754 g of lithium chloride as a phase-separating agent, 5.2 liter of NMP and 48 g of water, and it was heated up to the temperature of 260°C. Next, 16.0 g of p-DCB, 220 g of NMP and 2.82 g of 1,1,4-trichlorobenzene (hereinafter referred to as TCB) per 1 kg of the prepolymer synthesized above were added thereto to control a mole ratio of the raw materials. The prepolymer prepared was continuously fed to the reactor at a flow rate of 50.0 g/minute by means of a gear pump while maintaining the temperature at 60°C.

On the other hand, the polymerization liquid of about 250 g was drawn out once every five minutes from the drawing nozzle of the reactor in order to keep a liquid surface level constant. This operation was continued for 48 hours. The samples drawn out for prescribed time were separated into a polymer and a polymerization liquid by slant filtration to obtain the polymer. The polymer thus obtained was washed by stirring twice in hot water under heating. Then, it was dried under vacuum at the temperature of 120°C for 12 hours to measure a solution viscosity (η inh). The polymer thus obtained had a solution viscosity (η inh) of 0.28 dl/g, and the form thereof was globular. Then, the reactor was cooled and opened to observe the polymer to find that it was kept as well globular. The polymer was not adhered at all on the wall of the reactor. The mole ratios after controlled, that is, the conditions in the principal polymerization were p-DCB/S = 1.04, Li/S = 2.20, H₂O/S = 0.30, TCB/S = 0.01. TP/S = 0.01 and a sulfur concentration of 1.76 mole/liter of NMP. Further, the polymerization temperature was 260°C; the average retention time was 2 hours; and LiCl/NMP charged before the reaction was 3.52 mole/liter.

### Comparative Example 1

The same procedure as in Example 1 was carried out, except that in Example 1, TP was not added in the preliminary polymerization and that the amounts of p-DCB and water were changed in the principal polymerization to change the conditions after controlled to p-DCB/S = 1.07 and H₂O/S = 1.00. The sample obtained after 6 hours passed since starting the reaction held a globular form, but inferior heat transfer began to be observed from 10 hours later, and the resulting polymer was not globular but granular. The polymer obtained after the reactor was cooled and opened had an amorphous granular form and was a gel which was insoluble in a solvent. The polymer having a thickness of about 2 mm was densely adhered on the wall of the reactor.

### Comparative Example 2

The same procedure as in Example 1 was carried out, except that in Example 1, TP was not added in the preliminary polymerization and that the amounts of p-DCB, water and TCB were changed in the principal polymerization to change the conditions after controlled to p-DCB/S = 1.07, H₂O/S = 1.00 and TCB/S = 0.008. The sample obtained after 6 hours passed since starting the reaction held a globular form, but inferior heat transfer began to be observed from 20 hours later, and the resulting polymer was not globular but granular. The polymer obtained after the reactor was cooled and opened had an amorphous granular form and was a gel which was insoluble in a solvent. The polymer having a thickness of about 2 mm was densely adhered on the wall of the reactor.

### Comparative Example 3

The same procedure as in Example 1 was carried out, except that in Example 1, TP was not added in the preliminary polymerization and that the amounts of p-DCB, water and TCB were changed in the principal polymerization to change the conditions after controlled to p-DCB/S = 1.07, H₂O/S = 0.80 and TCB/S = 0.005. The sample obtained after 6 hours passed since starting the reaction held a globular form, but inferior heat transfer began to be observed from 20 hours later, and the resulting polymer was not globular but granular. The polymer obtained after the reactor was cooled and opened had an amorphous granular form and was a gel which was insoluble in a solvent. The polymer having a thickness of about 1 mm was adhered all over the wall of the reactor.

### Example 2

The same procedure as in Example 1 was carried out, except that in Example 1, 15.66 g (0.1 mole) of p-chlorobenzoic acid (hereinafter referred to as p-ClBA) was added in place of TP in the preliminary polymerization. The polymer obtained after 48 hours had solution viscosity (η inh) of 0.24 dl/g, and the form thereof was globular. Then, the reactor was cooled and opened to observe the polymer to find that it was kept as well globular. The polymer was not adhered at all on the wall of the reactor.

### Example 3

The same procedure as in Example 1 was carried out, except that in Example 1, 25.04 g (0.1 mole) of o-aminothiophenol (hereinafter referred to as o-ATP) was added in place of TP in the preliminary polymerization. The polymer obtained after 48 hours had solution viscosity (η inh) of 0.23 dl/g, and the form thereof was globular. Then, the reactor was cooled and opened to observe the polymer to find that it was kept as well globular. The polymer was not adhered at all on the wall of the reactor.

The examples and the comparative examples described above are shown altogether in Table 1.

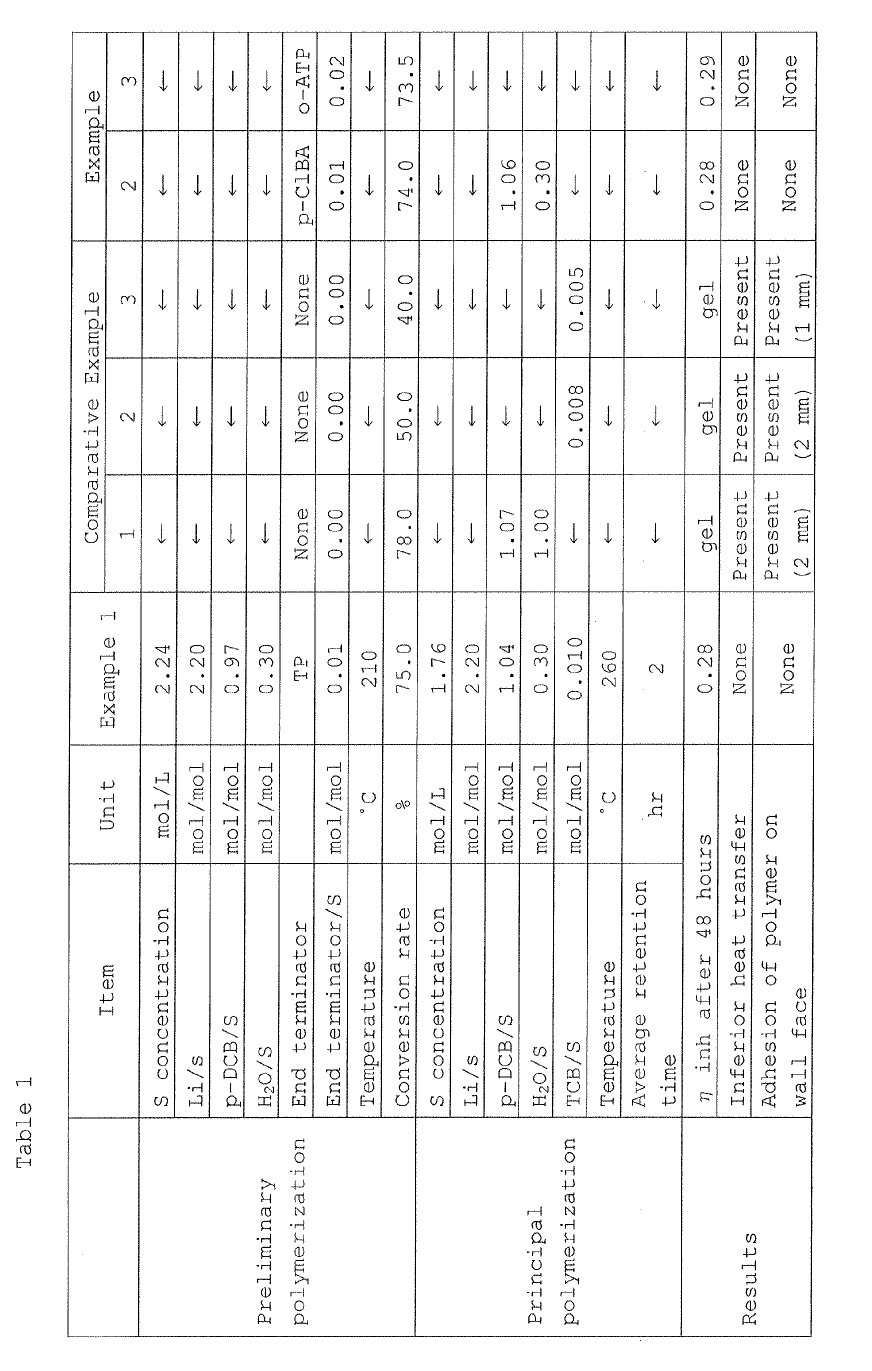

### INDUSTRIAL APPLICABILITY

According to the production process of the present invention, capable of being established is a continuous polymerization process for PAS in which a polymer can be prevented from being adhered onto a polymerization reaction bath to thereby make it possible to discharge a polymer phase and a solvent phase from the polymerization bath in a constant proportion to result in making it possible to always maintain a PAS composition (concentration) in the polymerization bath at a constant value, and capable of being provided is a continuous polymerization process for polyarylene sulfide which is useful for a rise and a stabilization in the molecular weight.

## Claims

1. A production process for polyarylene sulfide which is a process for continuously producing polyarylene sulfide by reacting a sulfur source with a dihalogenated aromatic compound in an aprotic organic solvent, **characterized by** comprising at least one polymerization reaction step in which two phases of a polymer phase and a solvent phase are separated and in which the polymer phase corresponding to a dispersion phase is a dispersion phase comprising globular droplets; and **characterized by** using an end terminator in the above polymerization reaction step.

2. The production process as described in claim 1, wherein the polymerization is carried out at a temperature falling within a range of from 230 to 280°C.

3. The production process as described in claim 1, wherein the continuous polymerization is carried out after charging the reactor in advance with a phase-separating agent and the aprotic organic solvent.

4. The production process as described in claim 1, wherein the continuous polymerization is carried out after the sulfur source and the dihalogenated aromatic compound are subjected in advance to batch polymerization in the aprotic organic solvent to turn the polymer phase corresponding to the dispersion phase into globular droplets.

5. The production process as described in claim 1, wherein preliminary polymerization is carried out in advance.

6. The production process as described in claim 5, wherein the preliminary polymerization is carried out at a temperature falling within a range of from 180 to 220°C.

7. The production process as described in claim 1 or 5, wherein an end terminator is added in the preliminary polymerization or the continuous polymerization to carry out the reaction.
